# FASCICULE DE BREVET EUROPEEN

(11) **EP 2 150 445 B1**
(45) Date de publication et mention de la délivrance du brevet: **17.07.2013**
(21) Numéro de dépôt: 08750039.3
(22) Date de dépôt: 05.05.2008
(51) Int. Cl.: B60S 1/38

(54) **AGENCEMENT D'UN DISPOSITIF DE PROJECTION DE LIQUIDE DE NETTOYAGE D'UN PANNEAU VITRE**
ANORDNUNG EINER VORRICHTUNG ZUM SPRÜHEN EINER WASCHFLÜSSIGKEIT ZUR REINIGUNG EINER GLASPLATTE
ARRANGEMENT OF A DEVICE FOR SPRAYING WASHER FLUID FOR CLEANING A GLAZED PANEL

(30) Priorité: 30.05.2007 FR 0703816
(43) Date de publication de la demande: 10.02.2010
(73) Titulaire: Valeo Systèmes d'Essuyage, 78321 La Verrière (FR)
(72) Inventeur: CERDAN, Jérôme, F-63570 Beaulieu (FR)
(86) Numéro de dépôt international: PCT/EP2008/055478
(87) Numéro de publication internationale: WO 2008/148614

(56) Documents cités:
- WO-A-01/51323
- DE-A1- 1 755 762
- GB-A- 2 342 281
- US-A- 5 539 951

## Description

L'invention propose un agencement d'un dispositif de projection d'un liquide de nettoyage sur un panneau vitré permettant de projeter le liquide de nettoyage en avant du balai lors de son mouvement de balayage.

L'invention propose plus particulièrement un agencement d'un dispositif de projection de liquide de nettoyage sur un mécanisme d'essuyage d'un panneau vitré, le mécanisme d'essuyage comportant un balai d'essuie-glace monté mobile en balayage par rapport au panneau vitré autour d'un axe vertical, qui est constitué d'une monture supérieure de support d'orientation principale longitudinale et d'une lame longitudinale inférieure, le dispositif de projection étant agencé par rapport au balai de manière à projeter le liquide sous la forme d'un jet d'axe principal longitudinal situé en avant de la lame, par rapport à son mouvement de balayage sur le panneau vitré et qui est agencé dans un plan longitudinal vertical médian du balai, et verticalement à proximité du panneau vitré.

Le document DE-A-1.755.762 décrit un mécanisme d'essuyage d'un panneau vitré de véhicule automobile, qui comporte un bras d'entraînement d'un balai d'essuyage du panneau vitré, autour d'un axe globalement vertical.

Le document WO-A-01/51323 montre un dispositif de projection monté sur une lame élastiquement déformable.

Le bras d'entraînement porte un dispositif de projection de liquide de nettoyage sur le panneau vitré.

Selon ce document, le balai est monté articulé par rapport au bras autour d'un axe supérieur longitudinal situé au niveau de la liaison supérieure du bras avec le balai.

De plus, le dispositif de projection du liquide est agencé dans un plan longitudinal vertical passant par l'axe longitudinal d'articulation du balai par rapport au bras, à proximité du panneau vitré. Le dispositif de projection projette le liquide en formant un jet d'axe principal longitudinal qui est orienté dans le plan principal longitudinal vertical de symétrie du balai.

Ainsi, lors de l'essuyage du panneau vitré, le balai pivote par rapport au bras autour de l'axe supérieur longitudinal, vers l'arrière par rapport au sens de déplacement du bras, de manière que le bras "tire" le balai.

La lame du balai est alors décalée vers l'arrière, selon le sens de déplacement, par rapport à l'axe longitudinal du jet de liquide.

Par conséquent le jet de liquide de nettoyage est projeté en avant de la lame, quel que soit le sens du balayage du bras et du balai par rapport au panneau vitré, autour de l'axe vertical d'articulation.

Cependant, la structure articulée est relativement complexe et volumineuse, ce qui peut nuire à la visibilité extérieure, lorsque cet agencement est monté sur un pare-brise avant de véhicule automobile.

De plus, du fait de la structure articulée du balai par rapport au bras, la lame essuie une zone du panneau vitré qui est inférieure à la zone de balayage du bras.

L'invention a pour but de proposer un agencement d'un dispositif de projection de liquide de nettoyage en avant de la lame, qui permet de remédier à ces inconvénients.

Dans ce but, l'invention propose un agencement tel que décrit précédemment, caractérisé en ce que le dispositif de projection est monté sur la monture de support, et en ce que la lame est apte à se déformer élastiquement lors du mouvement de balayage, de manière qu'une partie de la lame est située en arrière dudit plan longitudinal vertical médian du balai.

Selon d'autres caractéristiques de l'invention, prises isolément ou en combinaison :
- la lame comporte un dos supérieur qui est fixé à la monture, une raclette inférieure qui est en contact avec le panneau vitré, et une portion intermédiaire de liaison agencée verticalement entre le dos supérieur et la raclette inférieure, qui est apte à se déformer élastiquement globalement autour de son axe principal longitudinal lors du mouvement de balayage du balai, de manière que la raclette est située en arrière dudit plan longitudinal vertical médian du balai ;
- le dispositif de projection est monté sur une extrémité longitudinale de la monture située à proximité de l'axe vertical de balayage du balai ;
- le dispositif de projection est monté sur ladite extrémité longitudinale de la monture par l'intermédiaire d'un embout qui est fixé à la monture de manière démontable ;

- l'embout comporte des moyens pour positionner longitudinalement le dispositif de projection par rapport à la lame ;
- l'embout comporte un déflecteur aérodynamique qui s'étend transversalement de part et d'autre du dispositif de projection.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un agencement d'un dispositif de projection selon l'invention ;
- les figures 2 et 3 sont des sections de l'agencement représenté à la figure 1, montrant les positions du dispositif de projection par rapport à la lame en fonction du sens de balayage du balai sur le panneau vitré.

Pour la description de l'invention, on adoptera à titre non limitatif les orientations verticale, longitudinale et transversale selon le repère V, L, T indiqué aux figures.

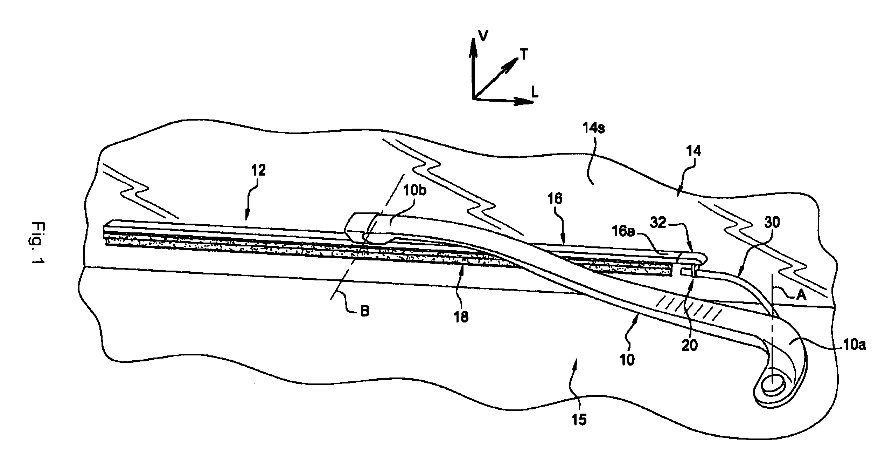

On a représenté à la figure 1 un bras 10 et un balai 12 pour l'essuyage de la face supérieure externe 14s d'un panneau vitré 14, tel qu'un pare-brise avant d'un véhicule automobile.

Une première extrémité 10a du bras 10 est articulée par rapport à un élément de structure de caisse 15 du véhicule autour d'un axe A globalement vertical et la deuxième extrémité 10b du bras 10 porte le balai 12.

Le balai 12 est un balai de faible hauteur du type "flat blade". Il comporte une monture de support 16 longitudinale qui est montée articulée sur la deuxième extrémité 10b du bras 10 autour d'un axe transversal B par l'intermédiaire d'un connecteur (non représenté) et elle porte une lame 18 d'essuyage du panneau vitré 14.

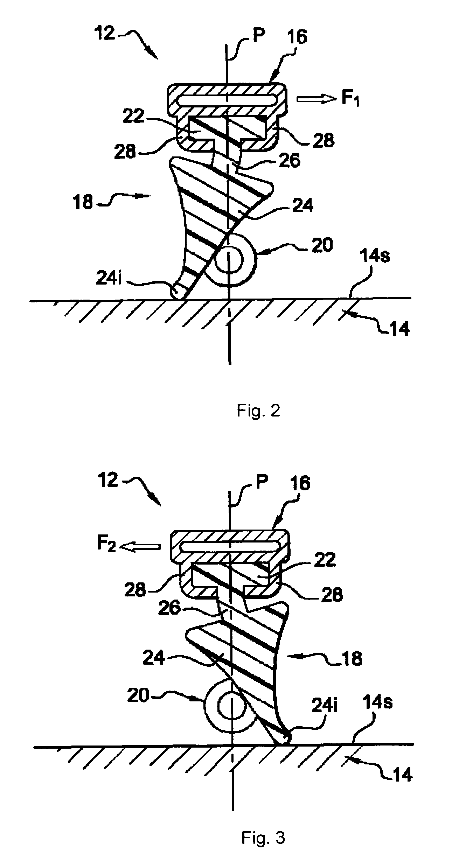

Un dispositif 20 de projection de liquide de nettoyage est agencé de manière à projeter le liquide de nettoyage sur la face externe 14s du panneau vitré 14, en avant du balai 12, par rapport au mouvement de balayage du balai 12 sur le panneau vitré, c'est-à-dire, lorsque le balai se déplace de gauche à droite, comme représenté à la figure 2 par la flèche F1, le dispositif de projection 20 projette le liquide de nettoyage à droite du balai 12, et lorsque le balai se déplace de droite à gauche, comme représenté à la figure 3 par la flèche F2, le dispositif de projection 20 projette le liquide de nettoyage à gauche du balai 12.

Pour cela, comme on peut le voir aux figures 2 et 3, le dispositif de projection 20 est agencé dans un plan longitudinal vertical P médian de la monture de support 16, à proximité de la face supérieure 14s du panneau vitré 14.

Conformément à l'invention, pour projeter le liquide de nettoyage en avant du balai 12, le dispositif de projection 20 est monté sur la monture de support 16 du balai 12, et le balai 12 est réalisé de manière que lors de son mouvement de balayage, la lame d'essuyage 18 se déforme en partie, pour être située en arrière du plan P longitudinal vertical médian de la monture, par rapport au mouvement du balai 12.

La lame 18 comporte un dos supérieur 22 qui est fixé à la monture 16, une raclette inférieure 24 dont la section est en "V", et dont l'arête inférieure 24i de la raclette 24 est en contact avec la face supérieure 14s du panneau vitré.

Enfin, la lame 18 comporte une portion intermédiaire 26 de raccordement de la raclette 24 avec le dos supérieur 22.

Pour porter le dos supérieur 22 de la lame 18, la monture de support comporte deux crochets inférieurs longitudinaux 28 en vis-à-vis, et qui délimitent un logement tubulaire ouvert vers le bas, dans lequel le dos supérieur 22 de la lame 18 est monté.

Conformément à l'invention, la portion intermédiaire 26 de la lame 18 est déformable élastiquement et elle est apte à fléchir lors du mouvement de balayage du balai 12 pour permettre un déplacement de la raclette 24 vers l'arrière par rapport au sens de déplacement du balai 12.

Comme on l'a dit plus haut, le dispositif de projection 20 est monté directement sur la monture 16 du balai 12.

Selon un mode de réalisation préféré, le dispositif de projection est monté sur une extrémité 16a de la monture 16, qui est de préférence l'extrémité 16a de la monture 16située à proximité de l'axe A vertical d'articulation du bras 10.

Cela permet de réduire la longueur d'un conduit 30 d'alimentation du dispositif de projection 20.

De plus, l'agencement du dispositif de projection 20 selon l'invention reste relativement discret.

Selon un autre aspect de l'invention, le balai 12 comporte un embout 32 qui est fixé à la monture 16 et qui porte le dispositif de projection 20.

Cet embout 32 est fixé à la monture 16 de manière démontable, de manière à faciliter le montage et le démontage de l'embout 32 d'avec la monture 16, lors d'un remplacement d'un balai 12 usagé par un autre balai 12 neuf.

Cela permet de conserver un même dispositif de projection 20, et par conséquent, de réduire le prix à payer par un utilisateur lors de ce remplacement de balai 12.

Selon une variante de réalisation, la position longitudinale de l'embout 32 par rapport à la monture 16 est réglable, par exemple par un système à butées (non représentées), pour permettre un positionnement correct du dispositif de projection 20 par rapport à la lame 18.

Selon encore une autre variante de réalisation de l'embout 32, celui-ci comporte un déflecteur aérodynamique (non représenté) qui s'étend globalement longitudinalement verticalement et qui est agencé transversalement de part et d'autre du dispositif de projection 20, c'est-à-dire qu'il recouvre transversalement le dispositif de projection 20.

Le déflecteur est réalisé de manière à limiter les perturbations aérodynamiques produites lors du déplacement du véhicule, et qui pourraient dévier le jet de liquide de nettoyage.

## Revendications

1. Agencement d'un dispositif 20 de projection de liquide de nettoyage sur un mécanisme d'essuyage (10, 12) d'un panneau vitré (14),
le mécanisme d'essuyage comportant un balai (12) d'essuie-glace monté mobile en balayage par rapport au panneau vitré (14) autour d'un axe (A) vertical, qui est constitué d'une monture supérieure (16) de support d'orientation principale longitudinale et d'une lame longitudinale inférieure (18), le dispositif de projection (20) étant agencé par rapport au balai (12) de manière à projeter le liquide sous la forme d'un jet d'axe principal longitudinal situé en avant de la lame (18), par rapport à son mouvement de balayage sur le panneau vitré (14) et qui est agencé dans un plan longitudinal vertical médian du balai (12), et verticalement à proximité du panneau vitré (14), **caractérisé en ce que** le dispositif de projection (20) est monté sur la monture de support (16), et **en ce que** la lame (18) est apte à se déformer élastiquement lors du mouvement de balayage, de manière qu'une partie (24) de la lame (18) est située en arrière dudit plan longitudinal vertical médian du balai (12).

2. Agencement selon la revendication précédente, **caractérisé en ce que** la lame (18) comporte un dos supérieur (22) qui est fixé à la monture (16), une raclette inférieure (24) qui est en contact avec le panneau vitré (14), et une portion intermédiaire (26) de liaison agencée verticalement entre le dos supérieur (22) et la raclette inférieure (24), qui est apte à se déformer élastiquement globalement autour de son axe principal longitudinal lors du mouvement de balayage du balai (12), de manière que la raclette (24) est située en arrière dudit plan longitudinal vertical médian du balai (12).

3. Agencement selon l'une quelconque des revendications précédentes, **caractérisé en ce que** le dispositif de projection (20) est monté sur une extrémité longitudinale (16a) de la monture (16) située à proximité de l'axe vertical de balayage (A) du balai (12).

4. Agencement selon la revendication précédente, **caractérisé en ce que** le dispositif de projection (20) est monté sur ladite extrémité longitudinale (16a) de la monture (16) par l'intermédiaire d'un embout (32) qui est fixé à la monture (16) de manière démontable.

5. Agencement selon la revendication précédente, **caractérisé en ce que** l'embout (32) comporte des moyens pour positionner longitudinalement le dispositif de projection (20) par rapport à la lame (18).

6. Agencement selon la revendication 4 ou 5, **caractérisé en ce que** l'embout (32) comporte un déflecteur aérodynamique qui s'étend transversalement de part et d'autre du dispositif de projection (20).

## Patentansprüche

1. Anordnung einer Vorrichtung (20) zum Sprühen einer Reinigungsflüssigkeit auf einen Wischmechanismus (10, 12) einer Glasplatte (14),
wobei der Reinigungsmechanismus einen Scheibenwischer (12) umfasst, der wischbeweglich in Bezug zu der Glasplatte (14) um eine vertikale Achse (A) montiert ist und der von einem oberen Träger (16) mit Längshauptausrichtung und einem unteren längs ausgerichteten Wischerblatt (18) gebildet ist, wobei die Sprühvorrichtung (20) in Bezug zu dem Scheibenwischer (12) derart angeordnet ist, dass sie die Flüssigkeit in Form eines vor dem Wischerblatt (18) befindlichen Strahls mit einer Hauptachse in Längsrichtung in Bezug zu seiner Wischbewegung auf der Glasplatte (14) aufsprüht, und die in einer vertikalen Längsmittelebene des Scheibenwischers (12) und vertikal in die Nähe der Glasplatte (14) angeordnet ist, **dadurch gekennzeichnet, dass** die Sprühvorrichtung (20) auf dem Träger (16) montiert ist, und dass das Wischerblatt (18) geeignet ist, sich elastisch bei der Wischbewegung zu verformen, so dass ein Teil (24) des Wischerblattes (18) hinter der vertikalen Längsmittelebene des Scheibenwischers (12) angeordnet ist.

2. Anordnung nach dem vorhergehenden Anspruch, **dadurch gekennzeichnet, dass** das Wischerblatt (18) eine obere Rückseite (22), die an dem Träger (16) befestigt ist, eine untere Abstreifseite (24), die mit der Glasplatte (14) in Kontakt ist, und einen Zwischenverbindungsabschnitt (26) umfasst, der vertikal zwischen der oberen Rückseite (22) und der unteren Abstreifseite (24) angeordnet ist, der geeignet ist, sich elastisch global um seine Hauptlängsachse bei der Wischbewegung des Scheibenwischers (12) zu verformen, so dass sich die Abstreifseite (24) hinter der vertikalen Längsmittelebene des Scheibenwischers (12) befindet.

3. Anordnung nach einem der vorhergehenden Ansprüche, **dadurch gekennzeichnet, dass** die Sprühvorrichtung (20) auf einem Längsende (16a) des Ständers (16) montiert ist, das sich in der Nähe der vertikalen Wischachse (A) des Scheibenwischers (12) befindet.

4. Anordnung nach dem vorhergehenden Anspruch, **dadurch gekennzeichnet, dass** die Sprühvorrichtung (20) auf dem Längsende (16a) des Ständers (16) mit Hilfe eines Ansatzes (32) montiert ist, der an dem Ständer (16) abnehmbar befestigt ist.

5. Anordnung nach dem vorhergehenden Anspruch, **dadurch gekennzeichnet, dass** der Ansatz (32) Mittel umfasst, um die Sprühvorrichtung (20) in Längsrichtung in Bezug zum Wischerblatt (18) zu positionieren.

6. Anordnung nach Anspruch 4 oder 5, **dadurch gekennzeichnet, dass** der Ansatz (32) ein aerodynamisches Ablenkblech umfasst, das sich quer beiderseits der Sprühvorrichtung (20) erstreckt.

## Claims

1. Arrangement of a device (20) for spraying washer liquid on a wiper mechanism (10, 12) of a glazed panel (14), the wiper mechanism comprising a windscreen wiper (12) mounted so as to be able to move when wiping relative to the glazed panel (14) about a vertical axis (A), which consists of an upper supporting mount (16) of mainly longitudinal orientation and a lower longitudinal blade (18), the spraying device (20) being arranged relative to the wiper (12) so as to spray the liquid in the form of a jet with a mainly longitudinal axis situated in front of the blade (18), relative to its wiping movement on the glazed panel (14) and which is arranged in a vertical, longitudinal mid-plane of the wiper (12), and vertically close to the glazed panel (14), **characterized in that** the spraying device (20) is mounted on the supporting mount (16), and **in that** the blade (18) is capable of deforming elastically during the wiping movement, so that a portion (24) of the blade (18) is situated behind the said vertical, longitudinal mid-plane of the wiper (12).

2. Arrangement according to the preceding claim, **characterized in that** the blade (18) comprises an upper back (22) which is attached to the mount (16), a lower scraper (24) which is in contact with the glazed panel (14), and an intermediate connecting portion (26) arranged vertically between the upper back (22) and the lower scraper (24), which is capable of deforming elastically generally about its main longitudinal axis during the wiping movement of the wiper (12), so that the scraper (24) is situated behind the said vertical, longitudinal mid-plane of the wiper (12).

3. Arrangement according to either one of the preceding claims, **characterized in that** the spraying device (20) is mounted on a longitudinal end (16a) of the mount (16) situated close to the vertical wiping axis (A) of the wiper (12).

4. Arrangement according to the preceding claim, **characterized in that** the spraying device (20) is mounted on the said longitudinal end (16a) of the mount (16) by means of a fitting (32) which is attached to the mount (16) in a removable manner.

5. Arrangement according to the preceding claim, **characterized in that** the fitting (32) comprises means for longitudinally positioning the spraying device (20) relative to the blade (18).

6. Arrangement according to Claim 4 or 5, **characterized in that** the fitting (32) comprises an aerodynamic deflector which extends transversally on either side of the spraying device (20).
